# EUROPEAN PATENT SPECIFICATION

(11) **EP 2 182 707 B1**
(45) Date of publication and mention of the grant of the patent: **26.06.2013**
(21) Application number: 09306032.5
(22) Date of filing: 29.10.2009
(51) Int. Cl.: H04M 1/215

(54) **Ambient sound detection and recognition method**
Umgebungsschallerfassungs- und -erkennungsverfahren
Détection de sons ambiants et procédé de reconnaissance

(30) Priority: 31.10.2008 US 109943 P
(43) Date of publication of application: 05.05.2010
(73) Proprietor: FRANCE TELECOM, 75015 Paris (FR)
(72) Inventor: HANNABY, Daniel, SAN FRANCISCO, CA CA 94109 (US)

(56) References cited:
- DE-A1- 10 149 496
- GB-A- 2 389 742

## Description

### FIELD OF THE PRESENT SYSTEM:

The present system relates to dating system, and more specifically to dating system using mobile devices.

### BACKGROUND OF THE PRESENT SYSTEM:

In the last few years Internet related technologies and other communication technologies have made it easier for people to meet and communicate. A multitude of dating services and applications are now available to users to facilitate one's interaction with a vast amount of other people. These dating services even take into account the profiling information of a user and of the person he/she is looking for to bring together people with common interests that would have normally never met otherwise.

Mobile technologies may also be used to meet new people. However, these technologies do not allow for the time being a precise profiling of others, nor can they be used in all environment to easily exchange profiling information. IR (infrared) or Bluetooth® interfaces are generally available on mobile devices and can be used by one user to send his/her mobile number to neighboring devices that have been discovered. Nevertheless the user has no means, when surrounded by a plurality of persons carrying a mobile device, to know who are the owners of the discovered devices. Furthermore, IR is a very directional transfer technology and is limited when obstacles are present. Bluetooth® is a technology that requires pairing of devices, i.e. that the devices involved need to acknowledge each other before the transfer becomes operable.

GB 2 389 742 discloses a dating system that employs a short-range wireless connection between users.

Identification tags such as RFID (Radio Frequency Identification) or NFC (Near Field Communication) tags may be used to exchange profiling data with other mobile devices equipped with the right readers. Nevertheless, such tags cannot be easily updated, and do not allow the user to change his profiling information whenever he wants to try other profiles for him.

Today there is still a need for an improved method and device that allows users to easily find another user matching their interests. There is a further need for a solution that can work in a plurality of environment, and that does not require pairing from other devices. There is a further need for a solution that allow a user to easily update his/her profile when for instance he/she was not successful in finding a match with his/her current profile.

### SUMMARY OF THE PRESENT SYSTEM:

It is an object of the present system to overcome disadvantages and/or make improvements in the prior art. It is another object of the present mobile device and method to overcome disadvantages and/or make improvements in the prior art.

To that extent, the present method proposes a method for exchanging user profiles between mobile devices, a first one of said mobile devices comprising a microphone for listening to ambient sounds, and a speaker for producing sounds, the method comprising the acts of transforming a first user profile into a first sound pattern, the first user profile comprising a personal profile for a first user of the mobile device; producing the first sound pattern using the speaker; detecting, using the microphone, any second sound pattern produced by a second one of the mobile devices and comprising an indication that the first user profile matches a user profile of a second user of said second mobile device.

The present method stems from the Applicant's observation that a sound based exchange of profiling information overcomes the known disadvantages of other transfer technologies. As the produced sound patters are not random, the mobile device, thanks to its microphone can distinguish these patterns from random surrounding noises. The range of detection is generally higher than in other transfer technologies such as IR, Bluetooth® or NFC. Furthermore, all mobile devices are already equipped with a microphone and a speaker, and do not need a significant adaptation to carry out the present method. Thanks to the present method, a user can broadcast his user profile to others, hoping a match can be found.

A mobile device according to the present system for exchanging user profiles with other mobile devices, may comprise a microphone for listening to ambient sounds, a speaker for producing sounds, a memory for storing a second user profile describing a second user of the mobile device, and a processor operable to control the microphone, the speaker and the memory. Its processor may be further arranged to detect, using the microphone, any sound pattern produced by a first mobile device and comprising a first user profile describing a first user of said first mobile device, produce a matching sound pattern using the speaker, when the second user profile and the first user profile are a match, said matching sound pattern comprising an indication of said match.

A telecommunication system according to the present system may comprise at least a first and second mobile devices, each of said devices comprising a microphone for listening to ambient sounds, a speaker for producing sounds, a processor operable to control the microphone and the speaker, the first mobile device comprising a memory for storing a first user profile describing a first user of said first mobile device, and the second mobile device comprising a memory for storing a second user profile describing a second user of said second mobile device. T>he processor of the first device may be operable to transform the first user profile into a first sound pattern, and; broadcast the first sound pattern using the speaker. The processor of the second device may operable to detect, using the microphone of the second device, the first sound pattern produced by the first mobile device, produce a matching sound pattern using the speaker of the second mobile device, when the first second user profiles are a match, said matching sound pattern comprising an indication of the match. The processor of the first mobile device may be further operable to detect, using the microphone of the first mobile device, the matching sound pattern produced by the second mobile device.

A method according to the present system is also proposed for exchanging user profiles between mobile devices, a first one of said mobile devices comprising a microphone for listening to ambient sounds, a speaker for producing sounds, a memory for storing a first user profile describing a first user of the mobile device. The method may comprise the acts of transforming a first user profile into a first sound pattern, broadcasting the first sound pattern using the speaker, and, detecting, using the microphone, any second sound pattern produced by a second one of the mobile devices and comprising an indication that the first user profile and a user profile of a second user of said second mobile device are a match.

A method according to the present system for exchanging user profiles between mobile devices is also proposed, a first one of said mobile devices comprising a microphone for listening to ambient sounds, a speaker for producing sounds, a memory for storing a second user profile describing a second user of the mobile device. The method may comprise the acts of detecting, using the microphone, any sound pattern produced by a first mobile device and comprising a first user profile describing a first user of said first mobile device, producing a matching sound pattern using the speaker, when the second user profile and the first user profile are a match, said matching sound pattern comprising an indication of said match.

Furthermore, a computer program embodied on a computer readable medium comprising computer program code means adapted to perform the steps of transforming a second user profile into a second sound pattern, broadcasting the second sound pattern using the speaker, and detecting, using a microphone, any first sound pattern produced by a first one of the mobile devices and comprising an indication that the first user profile and a user profile of a second user of said second mobile device are a match, when said program is run on a computer.

The present system further proposes a computer program embodied on a computer readable medium comprising computer program code means adapted to perform the steps of detecting, using a microphone, any sound pattern produced by a first mobile device and comprising a first user profile describing a first user of a first mobile device, producing a matching sound pattern using a speaker, when the first user profile and the second user profile are a match, said matching sound pattern comprising an indication of said match, when said program is run on a computer.

### BRIEF DESCRIPTION OF THE DRAWINGS:

The present system is explained in further detail, and by way of example, with reference to the accompanying drawings wherein:
FIG. 1 shows an telecommunication system in accordance with an embodiment of the present system;
FIG. 2 shows an illustrative flow diagram of operations in accordance with an embodiment of the present method; and,
FIG. 3 shows a mobile device in accordance with an embodiment of the present system.

### DETAILED DESCRIPTION OF THE PRESENT SYSTEM:

The following are descriptions of exemplary embodiments that when taken in conjunction with the drawings will demonstrate the above noted features and advantages, and introduce further ones.

In the following description, for purposes of explanation rather than limitation, specific details are set forth such as architecture, interfaces, techniques, devices etc., for illustration. However, it will be apparent to those of ordinary skill in the art that other embodiments that depart from these details would still be understood to be within the scope of the appended claims.

Moreover, for the purpose of clarity, detailed descriptions of well-known devices, systems, and methods are omitted so as not to obscure the description of the present system. Furthermore, routers, servers, nodes, base stations, gateways or other entities in a telecommunication network are not detailed as their implementation is beyond the scope of the present system and method.

Unless specified otherwise, the exemplary embodiment will be described hereafter in its application to a mobile device. This illustration is in no way a limitation of the scope of the present method and system as other mobile devices, i.e. in general communication devices such as PDA (Personal Digital Assistant), laptop computers, smart phones, ... may as well implement the present teachings.

Furthermore, what will be referred to as a "sound" in this description may be seen in general as a vibration transmitted through a solid, liquid, or gas, vibrations composed of frequencies capable of being detected by ears or the microphone of a portable device. A pattern of sound will be seen as a series of sounds carrying information, like digital information that has been transferred into the sound pattern. This is distinct from (random) ambient sounds that do not carry any information.

In addition, it should be expressly understood that the drawings are included for illustrative purposes and do not represent the scope of the present system.

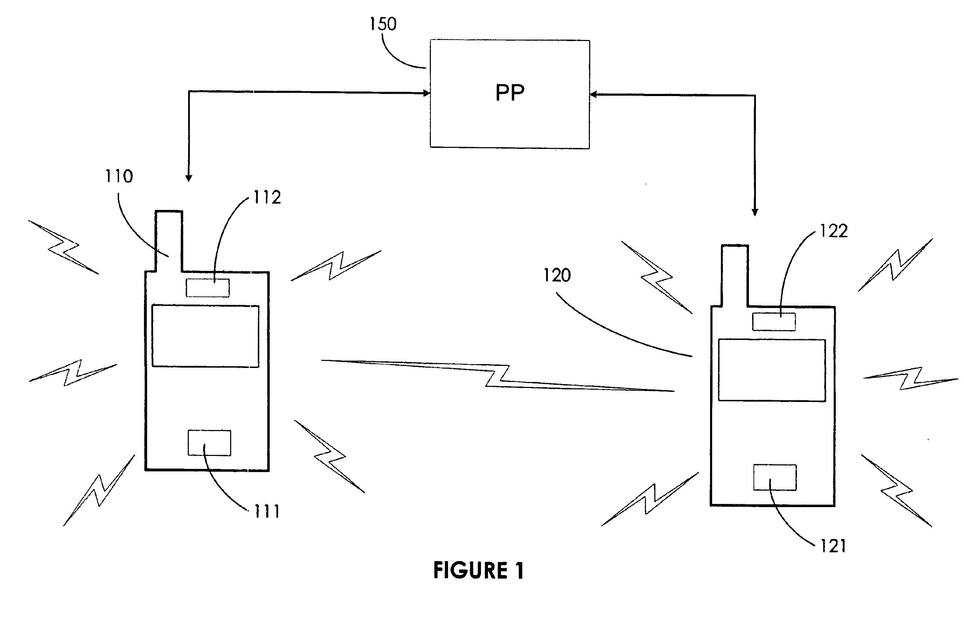

FIG. 1 shows an exemplary embodiment of the present system. A first mobile device 110 and a second mobile device 120 are respectively represented. Both mobile devices may comprises:
- a user interface of screen
- a microphone, respectively 111 and 121 for the first and second mobile devices, i.e. an acoustic to electric transducer or sensor to convert surrounding sounds into an electrical signal that can be further processed. The microphone allows to listen to ambient sounds, including sound patterns that can correspond to user profiles,
- a speaker or louder speaker, respectively 112 and 122 for the first and second mobile devices, i.e. an electromechanical transducer that converts an electrical signal into a sound, conversely to the microphone. The speaker allows the user to broadcast his user profile thanks to the produced sound pattern,
- a processor (not shown in FIG. 1) operable to control the microphone and the speaker, and implements the acts of the present method.

In the illustration of FIG. 1, only two mobile devices are presented, but the present teachings could be transposed to a plurality of mobile devices broadcasting sound patterns and listening to other sound patterns carrying profiling information. Each user of one of the mobile devices may define a user profile to be stored on a memory of the mobile device, this user profile may comprise two components:
- a personal user profile, describing how the user may present him/herself to others. Numerous profiling techniques exist today and are commonly used by dating services. A user may fill in a form and/or answer questions and a profile will be generated by this dating service. A less complex profile may for instance be determined through filling in a few categories such as activities, smoking habits, drinking habits, ...
- a partner profile, describing the person this user is looking for, this profile may be as refined as the personal profile or more simple depending on the dating service or how the user foresees this partner.

Both partner and personal user profiles may be seen as describing the user.

When two users are involved, the matching of profiles can be handled in different ways:
1. by verifying if the personal profile of the first user matches the partner profile of the second user,
2. by verifying if the personal profile of the second user matches the partner profile of the first user,
3. by verifying both.

In case n°1, the first user may choose to broadcast his first user personal profile, hoping for a match with another user partner profile. In case n°2, the first user may choose to broadcast his own partner profile, to send to other users what he is looking for, hoping that surrounding users personal profiles can match this first user partner profile. In case n°3, the first user may broadcast his personal and partner profile, and other user's mobile devices listening to the sound patterns may perform a two way match. These different scenarios will be all referred to as the matching of the user profiles.

Profiling techniques are commonly used by the man skilled in the art and are beyond the scope of the present method and system. A user may of course define several user profiles to allow multiple matching.

In the present system, a user may define his/her user profile through a portal either accessible directly from the mobile device or online using a computer and a browser. In the hereafter description, the present method and system will be - unless mentioned otherwise - described using a server based application hosted on a remote server 150 (as illustrated in FIG. 1) and allowing a user to download binary elements corresponding of his/her user profile.

The server 150, that can be seen as a Profile Platform (PP) 150, will offer a dating service, and may provide the following features to mobile devices:
- providing an agent that can be uploaded to the mobile devices 110 or 120, this agent allowing these mobile devices to handle the user profiles and the implementation of the present method,
- management of the user profiles by allowing editing, updating, removing, ... either through a web portal or directly using the mobile device. This is similar to any profile management allowed by dating services like MatchMaker™, Meetik™, and the likes,
- transform the user profile into a profile binary string. This may be performed by taking into account the different user profile entries and coding them into binary elements. Hashing techniques are for instance readily available to the man skilled in the art to produce a unique profile binary string corresponding to the user profile,
- push the profile binary string(s) to the mobile device each time the user proceeds to an update of his user profile or creates another profile.

The hereabove agent may, when uploaded to the user mobile device, allow a mobile device of a user to both:
- broadcast his user profile (here after referred to as the advertisement mode) and listen for an answer indicating a match, and ;
- listen to other mobile devices broadcasting their own user profiles, and answer with an indication of a match when possible (here after referred to as the search mode).

To that extend, the mobile agent may allow the following features:
- management of user profiles with the PP 150, and selection of an active user profile, i.e. the profile the user of the mobile device chooses to present to other users,
- translating (i.e. transform) the user profile binary strings, received from the PP 150, into sound patterns, i.e. a logical series of sounds carrying profiling information, as opposed to random sounds. Modulation techniques may be used for such a transformation. In an additional embodiment of the present method, the sound patterns may comprise a header and a trailer. The header may be seen as a sub (shorter) pattern common to all sound patterns used in the present method and known from the mobile devices. The trailer is another sub pattern immediately following the header and comprising the useful information, such as the profile of a user, and/or other indications relevant to the present method,
- broadcast the sound patterns using the mobile device speaker (advertisement mode),
- monitor ambient sounds and intercept a sound pattern broadcasted by other mobile devices and detect that this pattern is distinct from random ambient sounds. When broadcasted sound patterns comprise a header and a trailer, the mobile agent will only need to monitor for the known header, i.e. this common sub pattern, to recognize a sound pattern broadcasted by other mobile devices. After identifying the header, the agent will listen from the subsequent trailer in the monitored ambient sounds to look for the useful information,
- perform a reverse transformation of the detected sound pattern to pull out binary string data. The reverse transformation may be performed using algorithms to detect the different frequencies (Fourier transform) and

proceed with a demodulation of the detected sound pattern. The binary strings pulled out may be either a user profile sent from other mobile devices (search mode) or an answer from another mobile device with the indication of a match (advertisement mode),
- perform a match between the pulled out user profile if any and the active user profile (search mode). The matching may for instance be carried out using a proximity score between the pulled out user profile and the active user profile,
- generate and broadcast a matching sound pattern comprising an indication that a match has been found between the two user profiles (search mode). In the additional embodiment wherein the sound patterns have a header and a trailer, the trailer will comprise the indication of the match between the two user profiles.

As a mobile in the present system may be either (or both) in the advertisement or search modes, an intercepted sound pattern may be:
- the broadcast of another user profile, the useful information in the trailer will comprise the user profile itself, and/or,
- an answer from another mobile device with an indication of a profile match. The useful information in the trailer will comprise this indication of the profile match when a header and a trailer are used.

In the additional embodiment wherein the header and trailer are used for sound patterns, the transformation of binary strings into sound patterns as well as the reverse transformation need only to be performed for the trailer part of the sound pattern, as the header is common to generated sound pattern.

In the present illustration, the header is described as common to all sound patterns generated in the present method. In an alternative embodiment of the present method, several headers may be used the identify the type of sound patterns, provided they are known from the mobile agent uploaded on the user mobile device in the present system. With a limited number of headers to recognize, the monitoring of ambient sound by the mobile agent may be facilitated, thereby reducing the resource requirements and the power consumption. One example of different headers may be for example:
- one header for sound patterns broadcasted to advertise a profile or,
- another header for sound patterns broadcasted to reply to an advertised profile.

Whether one or a limited number of headers is used, the second mobile device 120 will only have to listen and search for a limited number of sound pattern headers.

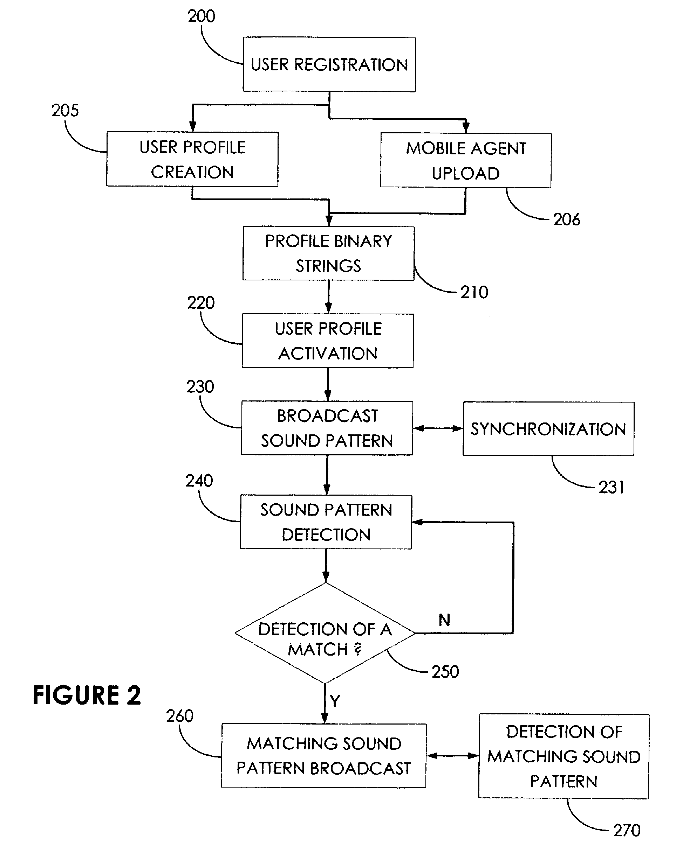

FIG. 2 is a flow chart illustrating an exemplary embodiment of the present method, wherein the first mobile device 110 broadcast a sound pattern to any surrounding mobile devices, illustrated here with mobile device 120. In the embodiment of the present method described here after, the first user will broadcast his user profile to listening mobile devices such as the second device 120. Acts 200 to 220 may be carried out by both mobile devices 110 and 120 as they correspond to the registration to the dating service, the upload of the mobile client and the creation of user profiles. First device 110 is in the advertisement mode, while second device 120 is in the search mode.

In an initial act 200, each user of the first and second mobile devices 110 and 120 respectively, referred to as the first and second users, will register with PP 150 to become subscribers to the dating service hosted on PP 150. The registration to the present dating service will allow the user to create and manage a plurality of user profiles (act 205) and upload from PP 150 the mobile agent (act 206) for implementing the present method.

In a further act 210 of the present method, the first user will receive from PP 150 one or more profile binary strings corresponding respectively to the user profiles he has created or updated. Each profile binary string may be send to the first mobile device for instance through an SMS or when browsing the portal for user profile management. Thus, the different user profiles may be stored through their corresponding profile binary string coded by and received from PP 150.

In a subsequent act 220, the first user will choose which user profile is the active profile. In other words, he will choose which profile binary string becomes the active profile binary string.

In order to broadcast a first sound pattern (act 230) - or profile sound pattern - corresponding to the active profile, the mobile agent on the first mobile device 110 will allow a audio translation of the corresponding active profile binary string. A transcoder similar to a modem (digital to analog conversion) may be used to transform the binary string into a series of sounds (using the speaker 111) characterized by their respective frequencies and time interval between successive sounds. In the additional embodiment of the present method, wherein a header and a trailer are used, as the useful information is carried by the trailer, the translation is only related to the trailer, the header being common to the generated sound patterns.

This resulting sound pattern is a unique transformation of the active profile binary string into sounds. The first sound pattern will be broadcasted using the mobile device speaker 111 at regular intervals. In an optional act 231, a synchronization of the first mobile device may be performed with other mobile devices through PP 150 to ensure that the first mobile device 110 broadcasts at the same time the other mobile devices are listening. Once the first mobile device 110 has started to broadcast the first sound pattern, it will start listening for a possible answer using microphone 112.

In a further act 240, the second mobile device 120 will detect, using its microphone 122, any sound pattern produced by the first mobile device 110. As mentioned earlier the sound pattern may be detected through a header to distinguish it from ambient random sounds.

Once a header has been detected, the mobile device 120 will identify the sound pattern trailer immediately following the identified header(s). The trailer for instance may be of the same duration for all sound patterns in the present method to facilitate the recognition of the trailer.

When a sound pattern produced by the first mobile device 110 is detected, the second mobile device will perform a reverse transformation of the detected sound pattern to pull out the first user profile. When a header and a trailer are used, the reverse transformation may be limited to the trailer to pull the first user profile out of the useful information.

In a further act 250, the second mobile device 120 will determine whether a match can be found. To this purpose, it will compare the pulled out first user profile to the active user profile on the second mobile device. As the pulled out user profile and the active user profile are actually available through the corresponding profile binary strings, the matching algorithm (based for instance on a proximity score) will take into account this particular format.

In no match is found, the second mobile device will resume the act 240 to detect any upcoming sound pattern broadcasted for other mobile devices. Act 240 may be carried out at regular intervals. If optional act 231 is performed, the second mobile device will also synchronize with the other mobile devices thanks to PP 150, and the second mobile device 120 will listen with a frequency equal to the frequency of the broadcasting act 230.

If a match is detected, i.e. that the pulled out user profile (first user profile) and the second device active profile (second user profile) correspond to each other, the second mobile device 120 will in a further act 260 produce a matching binary string, comprising an indication of the match, and optionally an identifier for the second mobile device. Thanks to the mobile agent on the second device, the matching binary string is translated (i.e. transformed) into a matching sound pattern, using the speaker 122, in a manner similar to that of the translation of the first user profile binary string into sound patterns. Consequently, this matching sound pattern will comprise an indication of the match. The matching sound pattern may further comprise an identifier for the second mobile device.

In the additional embodiment wherein a header and a trailer are used, the matching sound pattern will correspond to the trailer that carries the useful information and the header will be added upfront the trailer.

In a subsequent act 270, as the first mobile has been listening since act 230, it will detect the matching sound pattern. This matching sound pattern may be also identified through a header and a trailer. As for the second mobile device 120, the first mobile device 110 will proceed to a reverse translation of the detected matching sound pattern to extract the matching binary string, comprising the indication of the match, and the second device identifier when provided. Different techniques may be used for the two users to get into touch, such as using the portal to get the second user contact information using the second user identifier. Such techniques are beyond the scope of the present system.

In an additional embodiment of the present method, the first user profile may comprise an identifier for the first mobile device 110. This identifier will be added to the indication comprised in the matching sound pattern so that to the first mobile device 110 may detect in the matching sound pattern its own identifier prior to detecting the indication of a match. Thus the first mobile device can confirm that it is the actual recipient for the matching sound pattern. It may discard the matching sound pattern when the identifier cannot be found.

Both mobile devices 110 and 120 have an broadcasting mode (broadcast of the first sound pattern for device 110 or the matching sound pattern for device 120) and a listening mode (detection of the first sound pattern for device 120 or of the matching sound pattern for device 110).

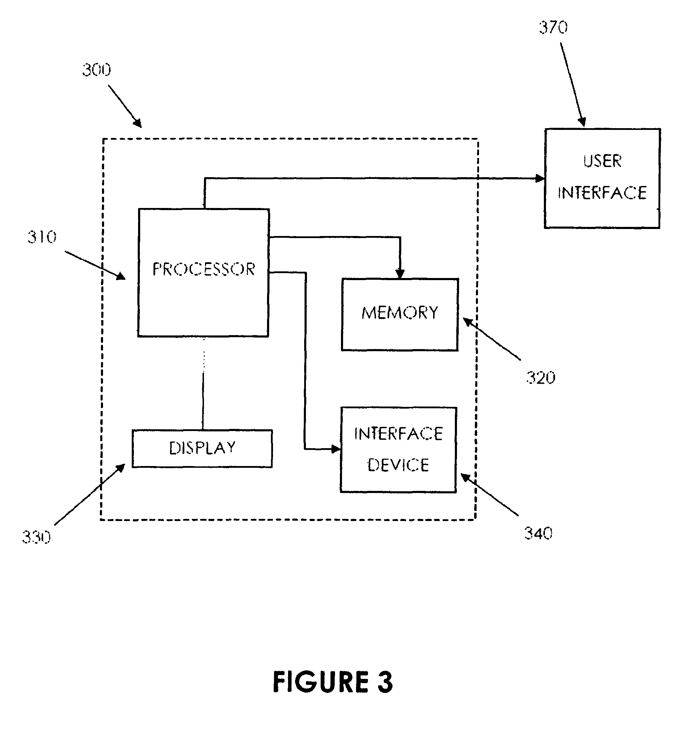

FIG. 3 shows a mobile device 300 in accordance with an embodiment of the present system. The mobile device has a processor 310 operationally coupled to a memory 320, a display 330, a user input device 370 and one or more interface devices 340. The mobile device 300 also comprising a speaker and a microphone (not shown in FIG. 3). The memory 320 may be any type of device for storing programming application data, such as to support data analysis, as well as other data, such as the user profile data (i.e. the profile binary strings) or else. The programming application data and other data are received by the processor 310 for configuring the processor 310 to perform operation acts in accordance with the present method. The operation acts may include controlling the display 330 to select the active user profile, or transforming the active profile binary string into a first sound pattern. The user input 370 may include a keypad or a touch sensitive display, or the likes. The user input device 370 is operable for interacting with the processor 310 including interaction within memory 320 and/or other elements of the present system.

Regarding memory 320, any medium known or developed that may store and/or transmit information suitable for use with a computer system may be used as the memory 320. Additional memories may also be used. The memory 320, and/or any other memories may be long-term, short-term, or a combination of long-term and short-term memories. These memories may configure the processor 310 to render and implement the present method, operational acts, and functions disclosed herein. The memories may be distributed or local and the processor 310, where additional processors may be provided, may also be distributed or may be singular as mentioned before.

For instance, memory 320 may be one single memory storing the application program to perform the acts of the present method and the user profiles. Moreover, the term "memory" should be construed broadly enough to encompass any information able to be read from or written to an address in the addressable space accessible by a processor. With this definition, information on a network is still within memory 320, for instance, because the processor 310 may synchronize the mobile device with the profile platform 150 or request the matching analysis for said profile platform in accordance with the present system.

Furthermore, processor 310 may for instance comprise several parts, such as a transformation part in charge of transforming the profile binary string into the sound pattern, and a detecting part in charge of detecting and analyzing any other second sound patterns. The transforming and detecting parts may themselves be further divided in subparts.

Clearly the processor 310, memory 320, display 330, user input device 370, and/or interface device 340 may all or partly be a portion of a computer system or other device. Furthermore, the present method is particularly suited to be carried out by a computer software program, such program containing modules corresponding to one or more of the individual steps or acts described and/or envisioned by the present system. Such program may of course be embodied in a computer-readable medium, such as an integrated chip, a peripheral device or memory, such as the memory 320 and/or other memory coupled to the processor 310.

The processor 310 is capable of providing control signals and/or performing operations in response to input signals from either the user input device 370 or a detected sound pattern. Processor 310 then executes instructions stored in the memory 320 using the input signals. The processor 310 may be an application-specific and/or general-use integrated circuit(s). Further, the processor 310 may be a dedicated processor for performing in accordance with the present system and/or may be a general-purpose processor wherein only one of many functions operates for performing in accordance with the present system. The processor 310 may operate utilizing a program portion, multiple program segments, and/or may be a hardware device utilizing a dedicated or multi-purpose integrated circuit. Further, in a distributed system, portions of an operation may be performed on one processor with data generated therefrom being transferred to one or more further processors.

Obviously, readily discernible modifications and variations of the present system are possible in light of the above teachings. It is therefore to be understood that within the scope of the appended claims, the present system may be practiced otherwise than as specifically described herein. For example, while described in terms of hardware/software components interactively cooperating, it is contemplated that the present systeem described herein may be practiced entirely in software. The software may be embodied in a carrier such as magnetic or optical disks, or a radio frequency or audio frequency carrier wave.

Thus, the foregoing discussion discloses and describes merely exemplary embodiments of the present invention. As will be understood by those skilled in the art, the present system may be embodied in other specific forms without departing from the spirit or essential characteristics thereof. Accordingly, the disclosure of the present system is intended to be illustrative, but not limiting of the scope of the present system, as well as other claims. The disclosure, including any readily discernible variants of the teachings herein, define, in part, the scope of the foregoing claim terminology such that no inventive subject matter is dedicated to the public.

For example, the matching may be performed by the profile platform in place of the mobile device.

The section headings included herein are intended to facilitate a review but are not intended to limit the scope of the present system. Accordingly, the specification and drawings are to be regarded in an illustrative manner and are not intended to limit the scope of the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise;
h) no specific sequence of acts or steps is intended to be required unless specifically indicated; and
i) the term "plurality of" an element includes two or more of the claimed element, and does not imply any particular range of number of elements; that is, a plurality of elements can be as few as two elements, and can include an immeasurable number of elements.

## Claims

1. A mobile device (110) for exchanging user profiles with other mobile devices (120), the mobile device comprising:
- a microphone (111) for listening to ambient sounds,
- a speaker (112) for producing sounds,
- a memory (320) for storing a first user profile describing a first user of the mobile device,
- a processor (310) operable to control the microphone, the speaker, and the memory,
the processor being further operable to:
- transform the first user profile into a first sound pattern, and;
- broadcast the first sound pattern using the speaker,
- detect, using the microphone, any second sound pattern produced by a second mobile device and comprising an indication that the first user profile and a user profile of a second user of said second mobile device are a match.

2. A mobile device as in claim 1, wherein the first user profile further comprises an identifier for the first mobile device, and wherein the indication further comprises said identifier, the processor being further operable to detect in the second sound pattern said identifier prior to detecting the indication of a match, and discard said second sound pattern when the identifier cannot be found.

3. A mobile device as in claim 1, wherein the first and second sound patterns comprise a header and a trailer, the trailers of the first sound pattern and the second pattern comprising respectively the first user profile and the indication of the match, the header of the second sound pattern being known from the mobile device, the mobile device being further operable to detect any second sound pattern based on the identification of said header from ambient sounds.

4. A mobile device as in claim 1, wherein the indication further comprises an identifier for the second mobile device so that the first user can identify the second user.

5. A mobile device (120) for exchanging user profiles with other mobile devices, the mobile device comprising:
- a microphone (121) for listening to ambient sounds,
- a speaker (122) for producing sounds,
- a memory (320) for storing a second user profile describing a second user of the mobile device,
- a processor (310) operable to control the microphone, the speaker and the memory,
the processor being further operable to:
- detect, using the microphone, any sound pattern produced by a first mobile device and comprising a first user profile describing a fisrt user of said first mobile device,
- produce a matching sound pattern using the speaker, when the second user profile and the first user profile are a match, said matching sound pattern comprising an indication of said match.

6. A mobile device as in claim 5, wherein the fisrt user profile further comprises an identifier for the fisrt mobile device, and wherein the indication further comprises said identifier.

7. A mobile as in claim 5, wherein the sound pattern produced by a fisrt mobile device comprises a header and a trailer, said trailer comprising the first user profile, the header of said sound pattern being known from the mobile device, the mobile device being further operable to detect any sound pattern based on the identification of said header from ambient sounds.

8. A mobile as in claim 5, wherein the indication further comprises an identifier for the mobile device.

9. A telecommunication system comprising at least a first and second mobile devices (110, 120), each of said devices comprising:
- a microphone (111, 121) for listening to ambient sounds,
- a speaker (121, 122) for producing sounds,
- a processor (320) operable to control the microphone and the speaker,
the first mobile device comprising a memory (310) for storing a first user profile describing a first user of said first mobile device,
the second mobile device comprising a memory for storing a second user profile describing a second user of said second mobile device,
the processor of the first device being operable to:
- transform the first user profile into a first sound pattern, and;
- broadcast the first sound pattern using the speaker,
the processor of the second device being operable to:
- detect, using the microphone of the second device, the first sound pattern produced by the first mobile device,
- produce a matching sound pattern using the speaker of the second mobile device, when the first second user profiles are a match, said matching sound pattern comprising an indication of the match,
the processor of the first mobile device being further operable to:
- detect, using the microphone of the first mobile device, the matching sound pattern produced by the second mobile device.

10. A system as in claim 9, wherein the first user profile further comprises an identifier for the first mobile device, and wherein the indication further comprises said identifier, the processor of said first mobile device being further operable to detect in the matching sound pattern said identifier prior to detecting the indication of a match, and discard said matching sound pattern when the identifier cannot be found.

11. A method for exchanging user profiles between mobile devices (110, 120), a first one of said mobile devices comprising:
- a microphone (111, 121) for listening to ambient sounds,
- a speaker (121, 122) for producing sounds,
- a memory (310) for storing a first user profile describing a first user of the mobile device,
the method comprising the acts of:
- transforming a first user profile into a first sound pattern,
- broadcasting the first sound pattern using the speaker, and,
- detecting, using the microphone, any second sound pattern produced by a second one of the mobile devices and comprising an indication that the first user profile and a user profile of a second user of said second mobile device are at match.

12. A method for exchanging user profiles between mobile devices, a first one of said mobile devices comprising:
- a microphone for listening to ambient sounds,
- a speaker for producing sounds,
- a memory for storing a second user profile describing a first user of the mobile device,
the method comprising the acts of:
- detecting, using the microphone, any sound pattern produced by a first mobile device and comprising a fisrt user profile describing a fisrt user of said first mobile device,
- producing a matching sound pattern using the speaker, when the second user profile and the first user profile are a match, said matching sound pattern comprising an indication of said match.

13. A computer program embodied on a computer readable medium comprising computer program code means adapted to perform the steps of the method of claim 11 when said program is run on a computer.

14. A computer program embodied on a computer readable medium comprising computer program code means adapted to perform the steps of the method of claim 12 when said program is run on a computer.

## Patentansprüche

1. Mobiles Gerät (110) zum Austauschen von Nutzerprofilen mit anderen mobilen Geräten (120), wobei das mobile Gerät Folgendes aufweist:
- ein Mikrofon (111) zum Hören des Umgebungsschalls,
- einen Lautsprecher (112) zum Erzeugen von Schall,
- einen Speicher (320) zum Speichern eines ersten einen ersten Nutzer des mobilen Geräts beschreibenden Nutzerprofils,
- einen Prozessor (310), der betreibbar zum Steuern des Mikrofons, des Lautsprechers und des Speichers ist,
wobei der Prozessor ferner betreibbar ist zum:
- Umwandeln des ersten Nutzerprofils in ein erstes Schallmuster und;
- Ausstrahlen des ersten Schallmusters, unter Anwendung des Lautsprechers,
- Erkennen, unter Anwendung des Mikrofons, jeglichen zweiten Schallmusters, das von einem zweiten mobilen Gerät erzeugt worden ist und eine Anzeige dafür aufweist, dass das erste Nutzerprofil und ein Nutzerprofil eines zweiten Nutzers des zweiten mobilen Geräts ein zusammenpassendes Paar bilden.

2. Mobiles Gerät nach Anspruch 1, wobei das erste Nutzerprofil ferner eine Kennung zum das erste mobile Gerät aufweist, und wobei die Anzeige ferner die Kennung aufweist, der Prozessor ferner betreibbar zum Erkennen der Kennung im zweiten Schallmuster vor Erkennen der Anzeige eines zusammenpassenden Paares und Verwerfen des zweiten Schallmusters bei nicht feststellbarer Kennung ist.

3. Mobiles Gerät nach Anspruch 1, wobei das erste und zweite Schallmuster jeweils einen Header und einen Anhänger aufweisen, wobei die Anhänger des ersten Schallmusters und des zweiten Schallmusters jeweils das erste Nutzerprofil und die Anzeige über das zusammenpassende Paar aufweisen, der Header des zweiten Schallmusters vom mobilen Gerät bekannt ist, wobei das mobile Gerät ferner betreibbar zum Erkennen jedes zweiten Schallmusters auf Basis der Identifikation des Headers von Umgebungsschall ist.

4. Mobiles Gerät nach Anspruch 1, wobei die Anzeige ferner eine Kennung für das zweite mobile Gerät aufweist, so dass der erste Nutzer den zweiten Nutzer identifizieren kann.

5. Mobiles Gerät (120) zum Austauschen von Nutzerprofilen mit anderen mobilen Geräten, wobei das mobile Gerät Folgendes aufweist:
- ein Mikrofon (121) zum Hören des Umgebungsschalls,
- einen Lautsprecher (122) zum Erzeugen von Schall,
- einen Speicher (320) zum Speichern eines zweiten einen zweiten Nutzer des mobilen Geräts beschreibenden Nutzerprofils,
- einen Prozessor (310), der betreibbar zum Steuern des Mikrofons, des Lautsprechers und des Speichers ist,
wobei der Prozessor ferner betreibbar ist zum:
- Erkennen, unter Anwendung des Mikrofons, von jeglichem von einem ersten mobilen Gerät erzeugten und einem einen ersten Nutzer des ersten mobilen Geräts beschreibendes erstes Nutzerprofil aufweisenden Schallmuster,
- Erzeugen, unter Anwendung des Lautsprechers, eines zusammenpassenden Schallmusters, wenn das zweite Nutzerprofil und das erste Nutzerprofil ein zusammenpassendes Paar darstellen, wobei das zusammenpassende Schallmuster eine Anzeige des zusammenpassenden Paares aufweist.

6. Mobiles Gerät nach Anspruch 5, wobei das erste Nutzerprofil ferner eine Kennung für das erste mobile Gerät aufweist, und wobei die Anzeige ferner die Kennung aufweist.

7. Mobiles Gerät nach Anspruch 5, wobei das von einem ersten mobilen Gerät erzeugte Schallmuster einen Header und einen Anhänger aufweist, wobei der Anhänger das erste Nutzerprofil aufweist, der Header des Schallmusters vom mobilen Gerät bekannt ist, das mobile Gerät ferner betreibbar zum Erkennen jeglichen Schallmusters auf Basis der Identifikation des Headers von Umgebungsschall ist.

8. Mobiles Gerät nach Anspruch 5, wobei die Anzeige ferner eine Kennung für das mobile Gerät aufweist.

9. Telekommunikationssystem, aufweisend mindestens ein erstes und ein zweites mobiles Gerät (110, 120), wobei jedes der Geräte Folgendes aufweist:
- ein Mikrofon (111, 121) zum Hören des Umgebungsschalls,
- einen Lautsprecher (121, 122) zum Erzeugen von Schall,
- einen Prozessor (320), der betreibbar zum Steuern des Mikrofons und des Lautsprechers ist,
wobei das erste mobile Gerät einen Speicher (310) zum Speichern eines ersten einen ersten Nutzer des ersten mobilen Geräts beschreibenden Nutzerprofils aufweist,
das zweite mobile Gerät einen Speicher zum Speichern eines zweiten einen zweiten Nutzer des zweiten mobilen Geräts beschreibenden Nutzerprofils aufweist,
der Prozessor des ersten Geräts betreibbar ist zum:
- Umwandeln des ersten Nutzerprofils in ein erstes Schallmuster und;
- Ausstrahlen des ersten Schallmusters unter Anwendung des Lautsprechers,
der Prozessor des zweiten Geräts betreibbar ist zum:
- Erkennen, unter Anwendung des Mikrofons des zweiten Geräts, des ersten vom ersten mobilen Gerät erzeugten Schallmusters,
- Erzeugen, unter Anwendung des Lautsprechers des zweiten mobilen Geräts, eines zusammenpassenden Schallmusters, wenn die ersten zweiten Nutzerprofile ein zusammenpassendes Paar darstellen, wobei das ein zusammenpassendes Paar darstellende Schallmuster eine Anzeige des zusammenpassenden Paars aufweist,
wobei der Prozessor des ersten mobilen Geräts ferner betreibbar ist zum:
- Erkennen, unter Anwendung des Mikrofons des ersten mobilen Geräts, des ein zusammenpassendes Paar darstellenden vom zweiten mobilen Gerät erzeugten Schallmusters.

10. System nach Anspruch 9, wobei das erste Nutzerprofil ferner eine Kennung für das erste mobile Gerät aufweist, und wobei die Anzeige ferner diese Kennung aufweist, der Prozessor des ersten mobilen Geräts ferner betreibbar ist zum Erkennen der Kennung in dem ein zusammenpassendes Paar darstellenden Schallmuster vor Erkennen der Anzeige eines zusammenpassenden Paares, und Verwerfen des ein zusammenpassendes Paar darstellenden Schallmusters bei nicht feststellbarer Kennung.

11. Verfahren zum Austauschen von Nutzerprofilen zwischen mobilen Geräten (110, 120), wobei ein erstes der mobilen Geräte Folgendes aufweist:
- ein Mikrofon (111, 121) zum Hören von Umgebungsschall,
- einen Lautsprecher (121, 122) zum Erzeugen von Schall,
- einen Speicher (310) zum Speichern eines ersten einen ersten Nutzer des mobilen Geräts beschreibenden Nutzerprofils,
wobei das Verfahren folgende Vorgänge aufweist:
- Umwandeln eines ersten Nutzerprofils in ein erstes Schallmuster,
- Ausstrahlen des ersten Schallmusters, unter Anwendung des Lautsprechers, und
- Erkennen, unter Anwendung des Mikrofons, jeglichen zweiten Schallmusters, das von einem zweiten der mobilen Geräte erzeugt worden ist und eine Anzeige dafür aufweist, dass das erste Nutzerprofil und ein Nutzerprofil eines zweiten Nutzers des zweiten mobilen Geräts ein zusammenpassendes Paar bilden.

12. Verfahren zum Austauschen von Nutzerprofilen zwischen mobilen Geräten, wobei ein erstes der mobilen Geräte Folgendes aufweist:
- ein Mikrofon zum Hören von Umgebungsschall,
- einen Lautsprecher zum Erzeugen von Schall,
- einen Speicher zum Speichern eines zweiten einen ersten Nutzer des mobilen Geräts beschreibenden Nutzerprofils,
wobei das Verfahren folgende Vorgänge aufweist:
- Erkennen, unter Anwendung des Mikrofons, jeglichen von einem ersten mobilen Gerät erzeugten und ein erstes einen ersten Nutzer des ersten mobilen Geräts beschreibenden Nutzerprofils aufweisenden Schallmusters,
- Erzeugen, unter Anwendung des Lautsprechers, eines zusammenpassenden Schallmusters, wenn das zweite Nutzerprofil und das erste Nutzerprofil ein zusammenpassendes Paar darstellen, wobei das zusammenpassende Schallmuster eine Anzeige des zusammenpassenden Paares aufweist.

13. Rechnerprogramm auf einem computerlesbaren Medium, aufweisend an die Ausführung der Vorgänge des Verfahrens nach Anspruch 11 angepasste Rechnerprogrammcode-Mittel, wenn das Programm auf einem Rechner ausgeführt wird.

14. Rechnerprogramm auf einem computerlesbaren Medium, aufweisend an die Ausführung der Vorgänge des Verfahrens nach Anspruch 12 angepasste Rechnerprogrammcode-Mittel, wenn das Programm auf einem Rechner ausgeführt wird.

## Revendications

1. Dispositif mobile (110) permettant d'échanger des profils utilisateur avec d'autres dispositifs mobiles (120), le dispositif mobile comprenant :
- un microphone (111) servant à écouter des sons ambiants,
- un haut-parleur (112) destiné à produire des sons,
- une mémoire (320) destinée à stocker un premier profil utilisateur décrivant un premier utilisateur du dispositif mobile,
- un processeur (310) exploitable pour commander le microphone, le haut-parleur, et la mémoire,
le processeur permettant en outre de :
- transformer le premier profil utilisateur en une première forme sonore, et
- diffuser la première forme sonore à l'aide du haut-parleur,
- détecter, à l'aide du microphone, toute deuxième forme sonore produite par un deuxième dispositif mobile et comprenant une indication que le premier profil utilisateur et un profil utilisateur d'un deuxième utilisateur dudit deuxième dispositif mobile correspondent.

2. Dispositif mobile selon la revendication 1, dans lequel le premier profil utilisateur comprend en outre un identifiant du premier dispositif mobile, l'indication comprenant en outre ledit identifiant, et le processeur permettant en outre de détecter dans la deuxième forme sonore ledit identifiant avant de détecter l'indication d'une correspondance, et de rejeter ladite deuxième forme sonore lorsque l'identifiant ne peut pas être trouvé.

3. Dispositif mobile selon la revendication 1, dans lequel les première et deuxième formes sonores comprennent un en-tête et une amorce de fin, les amorces de fin de la première forme sonore et de la deuxième forme sonore comportant respectivement le premier profil utilisateur et l'indication de la correspondance, l'en-tête de la deuxième forme sonore étant connu du dispositif mobile, le dispositif mobile permettant en outre de détecter toute deuxième forme sonore sur la base de l'identification dudit en-tête à partir de sons ambiants.

4. Dispositif mobile selon la revendication 1, dans lequel l'indication comprend en outre un identifiant du deuxième dispositif mobile pour que le premier utilisateur puisse identifier le deuxième utilisateur.

5. Dispositif mobile (120) permettant d'échanger des profils utilisateur avec d'autres dispositifs mobiles, le dispositif mobile comprenant :
- un microphone (121) servant à écouter des sons ambiants,
- un haut-parleur (122) destiné à produire des sons,
- une mémoire (320) destinée à stocker un deuxième profil utilisateur décrivant un deuxième utilisateur du dispositif mobile,
- un processeur (310) exploitable pour commander le microphone, le haut-parleur et la mémoire,
le processeur permettant en outre de :
- détecter, à l'aide du microphone, toute forme sonore produite par un premier dispositif mobile et comprenant un premier profil utilisateur décrivant un premier utilisateur dudit premier dispositif mobile,
- produire une forme sonore de correspondance à l'aide du haut-parleur, lorsque le deuxième profil utilisateur et le premier profil utilisateur correspondent, ladite forme sonore de correspondance comportant une indication de ladite correspondance.

6. Dispositif mobile selon la revendication 5, dans lequel le premier profil utilisateur comprend en outre un identifiant du premier dispositif mobile, l'indication comportant en outre ledit identifiant.

7. Mobile selon la revendication 5, dans lequel la forme sonore produite par un premier dispositif mobile comprend un en-tête et une amorce de fin, ladite amorce de fin comportant le premier profil utilisateur, l'en-tête de ladite forme sonore étant connu du dispositif mobile, le dispositif mobile permettant en outre de détecter toute forme sonore sur la base de l'identification dudit en-tête à partir de sons ambiants.

8. Mobile selon la revendication 5, dans lequel l'indication comprend en outre un identifiant du dispositif mobile.

9. Système de télécommunication comprenant au moins un premier et un deuxième dispositif mobile (110, 120), chacun desdits dispositifs comportant :
- un microphone (111, 121) servant à écouter des sons ambiants,
- un haut-parleur (121, 122) destiné à produire des sons,
- un processeur (320) exploitable pour commander le microphone et le haut-parleur,
le premier dispositif mobile comprenant une mémoire (310) destinée à stocker un premier profil utilisateur décrivant un premier utilisateur dudit premier dispositif mobile,
le deuxième dispositif mobile comprenant une mémoire destinée à stocker un deuxième profil utilisateur décrivant un deuxième utilisateur dudit deuxième dispositif mobile,
le processeur du premier dispositif permettant de :
- transformer le premier profil utilisateur en une première forme sonore, et
- diffuser la première forme sonore à l'aide du haut-parleur,
le processeur du deuxième dispositif permettant de :
- détecter, à l'aide du microphone du deuxième dispositif, la première forme sonore produite par le premier dispositif mobile,
- produire une forme sonore de correspondance à l'aide du haut-parleur du deuxième dispositif mobile, lorsque les premier et deuxième profils utilisateur correspondent, ladite forme sonore de correspondance, comportant une indication de la correspondance,
le processeur du premier dispositif mobile permettant en outre de :
- détecter, à l'aide du microphone du premier dispositif mobile, la forme sonore de correspondance produite par le deuxième dispositif mobile.

10. Système selon la revendication 9, dans lequel le premier profil utilisateur comprend en outre un identifiant du premier dispositif mobile, l'indication comportant en outre ledit identifiant, et le processeur dudit premier dispositif mobile permettant en outre de détecter dans la forme sonore de correspondance ledit identifiant avant de détecter l'indication d'une correspondance, et de rejeter ladite forme sonore de correspondance lorsque l'identifiant ne peut pas être trouvé.

11. Procédé permettant d'échanger des profils utilisateur entre des dispositifs mobiles (110, 120), un premier desdits dispositifs mobiles comprenant :
- un microphone (111, 121) servant à écouter des sons ambiants,
- un haut-parleur (121, 122) destiné à produire des sons,
- une mémoire (310) destinée à stocker un premier profil utilisateur décrivant un premier utilisateur du dispositif mobile,
le procédé comportant les étapes consistant à :
- transformer un premier profil utilisateur en une première forme sonore,
- diffuser la première forme sonore à l'aide du haut-parleur, et
- détecter, à l'aide du microphone, toute deuxième forme sonore produite par un deuxième des dispositifs mobiles et contenant une indication que le premier profil utilisateur et un profil utilisateur d'un deuxième utilisateur dudit deuxième dispositif mobile correspondent.

12. Procédé permettant d'échanger des profils utilisateur entre des dispositifs mobiles, un premier desdits dispositifs mobiles comprenant :
- un microphone servant à écouter des sons ambiants,
- un haut-parleur destiné à produire des sons,
- une mémoire destinée à stocker un deuxième profil utilisateur décrivant un premier utilisateur du dispositif mobile,
le procédé comprenant les étapes consistant à :
- détecter, à l'aide du microphone, toute forme sonore produite par un premier dispositif mobile et comportant un premier profil utilisateur décrivant un premier utilisateur dudit premier dispositif mobile,
- produire une forme sonore de correspondance à l'aide du haut-parleur, lorsque le deuxième profil utilisateur et le premier profil utilisateur correspondent, ladite forme sonore de correspondance contenant une indication de ladite correspondance.

13. Programme informatique enregistré sur un support exploitable par ordinateur, comprenant des moyens de code de programme informatique conçus pour mettre en oeuvre les étapes du procédé de la revendication 11 lorsque ledit programme est exécuté sur un ordinateur.

14. Programme informatique enregistré sur un support exploitable par ordinateur, comprenant des moyens de code de programme informatique conçus pour mettre en oeuvre les étapes du procédé de la revendication 12 lorsque ledit programme est exécuté sur un ordinateur.
